# EUROPÄISCHE PATENTANMELDUNG

(11) **EP 0 792 719 A1**
(43) Veröffentlichungstag der Anmeldung: **03.09.1997**
(21) Anmeldenummer: 97100090.6
(22) Anmeldetag: 04.01.1997
(51) Int. Cl.: B23Q 7/14, B23Q 41/02

(54) **Maschinenzentrum**

(30) Priorität: 01.03.1996 DE 19607782
(71) Anmelder: CHIRON-WERKE GMBH & CO. KG, 78532 Tuttlingen (DE)
(72) Erfinder: Winkler, Hans-Henning, Dr.-Ing., 78532 Tuttlingen (DE); Deufel, Karl, 78600 Kolbingen (DE)
(74) Vertreter: Otten, Hajo, Dr.-Ing.

(57) **Zusammenfassung**

Ein Maschinenzentrum (10) umfaßt mehrere entlang einer Bahn angeordnete Werkzeugmaschinen (11, 12, 13), die jeweils einen durch eine Bedienertür (21) zugänglichen Arbeitsraum (18) zum Bearbeiten von in einer Aufnahme (24) befindlichen Werkstücken (15) aufweisen. Ferner ist ein Beladesystem (16) zum Transportieren der Werkstücke (15) zwischen den einzelnen Werkzeugmaschinen (11, 12, 13) und zum Auswechseln der Werkstücke (15, 28) an den Werkzeugmaschinen (11, 12, 13) durch eine von der jeweiligen Bedienertür (21) verschließbare Ladeöffnung (17) hindurch vorgesehen. Zumindest einige der Werkzeugmaschinen (11, 12, 13) führen nacheinander an demselben Werkstücke (15, 28) unterschiedliche Bearbeitungsvorgänge durch. Das Beladesystem (16) umfaßt eine an den Werkzeugmaschinen (11, 12, 13) angeordnete Transportbahn (32) zum manuellen Verfahren der Werkstücke (15, 28) von einer Werkzeugmaschine (11, 12, 13) zu einer nächsten.

## Beschreibung

Die vorliegende Erfindung betrifft ein Maschinenzentrum mit mehreren entlang einer Bahn angeordneten Werkzeugmaschinen, die jeweils einen durch eine Bedienertür zugänglichen Arbeitsraum zum Bearbeiten von in einer Aufnahme befindlichen Werkstücken aufweisen, sowie einem Beladesystem zum Transportieren der Werkstücke zwischen den einzelnen Werkzeugmaschinen und zum Auswechseln der Werkstücke an den Werkzeugmaschinen durch eine von der jeweiligen Bedienertür verschließbare Ladeöffnung, wobei zumindest einige der Werkzeugmaschinen nacheinander an demselben Werkstück unterschiedliche Bearbeitungsvorgänge durchführen.

Derartige Maschinenzentren sind allgemein bekannt.

Bei den bekannten Maschinenzentren sind die Beladesysteme automatisch betriebene Ladevorrichtungen, die vor den jeweiligen Werkzeugmaschinen angeordnet sind, die nebeneinander entweder geradlinig oder im Kreis aufgestellt sind. Die Ladevorrichtung weist ein Gerät auf, das zwischen einem Teilespeicher und der jeweiligen Werkzeugmaschine hin- und herfährt und dabei Werkstücke transportiert. Auf diese Weise kann eine größere Anzahl von Werkzeugmaschinen aus einem einzigen Teilespeicher beschickt werden, aus dem die zu bearbeitenden Werkstücke entnommen werden. Die einzelnen Werkzeugmaschinen führen dabei an den Werkstücken unterschiedliche Bearbeitungsvorgänge durch, so daß ein Werkstück der Reihe nach mehrere Werkzeugmaschinen durchläuft, bevor es in einem anderen Teilespeicher abgelegt wird.

Die Ladevorrichtung arbeitet dabei häufig auf der Höhe der Bedienertür und wechselt die Werkstücke durch diese an der Werkzeugmaschine aus. Die Bedienertür wird aber gleichzeitig auch für Rüst- und Servicezwecke benötigt, also zur Wartung, zum Austausch von Werkzeugen, zum Nachmessen von Werkzeugen oder bestimmten Geometriefaktoren etc.

Ein Beispiel für eine derartige Ladevorrichtung ist in der DE 42 34 674 A1 beschrieben, wo ein Robotor an der Vorderseite einer Werkzeugmaschine auf der Höhe der Bedienertür verschiebbar angeordnet ist. Der Roboter weist einen Mechanismus auf, über den er die Bedienertür parallel zur Werkzeugmaschine so verschieben kann, daß die Ladeöffnung freigegeben wird. Ferner ist an dem Roboter ein mehrarmiger Werkstückgreifer vorgesehen, über den der Roboter Werkstücke an der Werkzeugmaschine auswechseln kann.

Wenn an einer derartigen Werkzeugmaschine eine Störung auftritt oder eine Wartungsarbeit erforderlich ist, so muß die jeweilige Bedienungsperson an dem Roboter vorbei durch die Bedienertür hindurch in den Arbeitsraum der Werkzeugmaschine eingreifen, um die erforderlichen Arbeiten vorzunehmen. Das bedeutet jedoch weiter, daß die anderen Werkzeugmaschinen eines mit solchen Werkzeugmaschinen ausgestatteten Maschinenzentrums von der Ladevorrichtung nicht weiter bedient werden können, wenn der Sicherheit der Bedienungsperson Vorrang gegeben wird.

Ein weiterer Nachteil der bekannten Maschinenzentren liegt in der komplizierten, aufwendigen Technik für derartige automatisierte Beladesysteme. Diese Beladesysteme sind sehr wartungsintensiv und mit hohen Kosten verbunden. Da die Abläufe für viele Personen außerdem nicht mehr durchschaubar sind, begegnet eine derartige "Superautomatisierung" im Alltagseinsatz großen Bedenken, da ein großer Teil des üblichen Personals derartige Maschinenzentren nicht bedienen kann.

Neben den hohen Investitionskosten für derartige Beladesysteme kommen also noch weitere, sehr hohe Kosten für das hochqualifizierte Personal hinzu, das für die Bedienung derartiger Maschinenzentren erforderlich ist.

Vor diesem Hintergrund ist es Aufgabe der vorliegenden Erfindung, das eingangs genannte Maschinenzentrum derart weiterzubilden, daß es ein einfach zu bedienendes, einfach aufgebautes sowie wartungsarmes Beladesystem umfaßt, das bei dem Bedienungspersonal eine hohe Akzeptanz findet. Ferner sollen dabei insgesamt die Investitionskosten sowie die Betriebskosten gesenkt werden können.

Erfindungsgemäß wird diese Aufgabe bei dem eingangs genannten Maschinenzentrum dadurch gelöst, daß das Beladesystem eine an den Werkzeugmaschinen angeordnete Transportbahn zum manuellen Verfahren der Werkstücke von einer Werkzeugmaschine zu einer nächsten umfaßt.

Die der Erfindung zugrundeliegende Aufgabe wird auf diese Weise vollkommen gelöst.

Es wird nämlich auf die kosten- und wartungsintensiven Beladesysteme aus dem Stand der Technik verzichtet und dafür eine Art manuelles Beladesystem geschaffen, bei dem die Werkstücke manuelle von einer Werkzeugmaschine zur anderen verschoben werden. Ein Vorteil bei diesem System liegt darin, daß das Bedienungspersonal die Werkstücke nicht von Hand von einer Werkzeugmaschine zur anderen tragen muß, der Bediener läuft vielmehr mit dem von ihm "bearbeiteten" oder "beaufsichtigten" Werkstück von einer Maschine zur nächsten, wo er dann manuell das Werkstück an der Werkzeugmaschine auswechselt.

Trotz dieses auf den ersten Blick als Rückschritt anzusehenden manuellen Beladesystems findet es große Akzeptanz zum einen deshalb, weil die damit verbundenen Investitionskosten sehr gering sind. Aber auch bei dem Bedienungspersonal ist die Akzeptanz groß, da hierdurch Arbeitsplätze mit geringer Qualifikation geschaffen werden, die jedoch keine körperlich anstrengenden Tätigkeiten erfordern, wie dies mit vielen Tätigkeiten für gering qualifiziertes Personal häufig verbunden ist.

Ein weiterer Vorteil liegt darin, daß auf das bisher erforderliche hochqualifizierte und damit sehr teure Personal zumindest teilweise verzichtet werden kann, so daß sich im Wechselspiel von geringeren Investitionskosten und geringeren Kosten für das hochqualifizierte Personal einerseits sowie zusätzlichen Kosten für gering qualifiziertes Personal andererseits der Einsatz des neuen Maschinenzentrums von der finanziellen Seite her lohnt.

Andererseits ist zu beachten, daß das neue Maschinenzentrum wegen der einfacheren Technik und der geringeren Anforderung an die Bedienung betriebssicherer ist, so daß es insgesamt zu einer geringeren Anzahl von Stillstandszeiten kommt. Auch die oben erwähnten Nachteile bei der Wartung sowie dem Service an den das Maschinenzentrum ausmachenden Werkzeugmaschinen sind beseitigt, da die Bedienertür nunmehr ausschließlich für das Bedienungspersonal vorbehalten ist.

Ein weiterer, ganz entscheidender Vorteil bei dem neuen Maschinenzentrum ist im Bereich der Qualitätskontrolle zu sehen, da jetzt ein fertig eingerichtetes Maschinenzentrum von ein oder zwei Bedienungspersonen schnell mit einer gewissen Anzahl von Werkstücken durchlaufen werden kann, um die Einrichtung und die Bearbeitungsqualität des Maschinenzentrums zu testen. Auf die beim Stand der Technik vorher erforderliche aufwendige Einrichtung des Beladesystemes kann verzichtet werden.

Ein weiterer Vorteil liegt darin, daß hier mit wenigen Werkstücken eine Qualitätskontrolle durchgeführt werden kann, während beim Stand der Technik immer eine ganze Palette von an dem Teilespeicher einzuladenden Werkstücken durchgefahren werden mußte, um die gesamte Funktion des Maschinenzentrums testen zu können. Wenn nämlich ein Beladeroboter nacheinander eine Palette mit z.B. hundert Werkstücken in einem Zyklus abarbeitet, so kann es durchaus sein, daß dieser Beladeroboter die an unterschiedlichen Positionen im Teilespeicher vorgesehenen Werkstücke unterschiedlich faßt, so daß sie auch unterschiedlich in die Aufnahmen an den Werkzeugmaschinen eingespannt werden. Dies kann jedoch zu einer Abweichung bei der Maßgenauigkeit etc. führen, so daß erst nachdem eine ganze Palette von Werkstücken abgearbeitet wurde, eine endgültige Aussage für die Qualitätskontrolle gewonnen wird. Bei dem neuen Maschinenzentrum kann dies - wie gesagt - bereits nach wenigen durchfahrenen Werkstücken möglich sein, so daß auch bezüglich der Qualitätskontrolle das neue Maschinenzentrum große Vorteile mit sich bringt.

In einem Ausführungsbeispiel ist es dann bevorzugt, wenn die Transportbahn eine Rollenbahn ist, an der Transportrollen quer zur Verfahrrichtung der unmittelbar auf diesen verschiebbaren Werkstücke vorgesehen sind.

Hier ist von Vorteil, daß keine Werkstückwagen etc. verwendet werden müssen, so daß sich insgesamt die Konstruktion der Transportbahn deutlich vereinfacht und damit preiswerter wird. Die Transportrollen ermöglichen es jetzt, daß die Werkstücke unmittelbar auf die Transportbahn aufgesetzt und dann von der Bedienungsperson mitgeschoben wird, während diese von einer Werkzeugmaschine zur nächsten geht. Ingesamt sind damit die körperlichen Anstrengungen der Bedienungspersonen minimiert, so daß die Akzeptanz sehr hoch ist.

Dabei ist es bevorzugt, wenn zumindest einige der Transportrollen im wesentlichen waagerecht verlaufen bzw. im wesentlichen vertikal und von der Werkzeugmaschine weggeneigt verlaufen.

Hier ist von Vorteil, daß je nach Geometrie der zu bearbeitenden Werkstücke diese liegend oder aber stehend transportiert werden können, wobei im letztere Falle durch die Neigung der vertikalen und ggf. horizontalen Transportrollen dafür gesorgt wird, daß die Werkstücke nicht verkanten oder umfallen.

Allgemein ist es bevorzugt, wenn zumindest einige der Werkzeugmaschinen in ihrem Arbeitsraum einen Zwischenspeicher für Werkstücke aufweisen.

Hier ist von Vorteil, daß die Bedienungsperson zunächst das fertig bearbeitete Werkstücke in den Zwischenspeicher legen kann, dann das nächste Werkstück von den Transportrollen entnimmt und auf die Aufnahme legt, bevor sie dann das Werkstück aus dem Zwischenspeicher wieder entnimmt und auf die Transportrollen setzt. Durch diese Weise wird ein einfacher Handhabungsablauf ermöglicht, die Bedienungsperson weiß immer, wo sie das Werkstück absetzen kann.

Andererseits ist es weiter bevorzugt, wenn zumindest einige der Werkzeugmaschinen in ihrem Arbeitsraum einen Auswerfer aufweisen, der fertig bearbeitete Werkstücke automatisch aus der Aufnahme in den Zwischenspeicher überführt.

Hier ist von Vorteil, daß dem Bedienungspersonal ein Handgriff erspart wird, das Herausnehmen der Werkstücke aus der Aufnahme und die Ablage in den Zwischenspeicher erfolgt automatisch. Derartige Auswerfer sind technisch sehr einfach realisiert, so daß mit ihnen keine großen Investitionskosten einhergehen. Mit automatischen Beladesystemen können derartig einfache Auswerfer jedoch nicht verwendet werden, da bei Einsatz derartiger Auswerfer die Position der Werkstücke in dem Zwischenspeicher nicht genau definiert ist. Ein Beladeroboter hätte also Schwierigkeiten, ein derart ausgeworfenes Werkstück aus einem Zwischenspeicher zu entnehmen. Solche Schwierigkeiten bestehen bei Bedienungspersonal selbstverständlich nicht.

In einer Weiterbildung ist es dann bevorzugt, wenn zumindest einige der Werkzeugmaschinen einen automatischen Öffnungsmechanismus aufweisen, der nach Beendigung der jeweiligen Bearbeitung eines Werkstückes die Bedienertür selbsttätig öffnet.

Diese Maßnahme ist aus sicherheitstechnischen Gründen von Vorteil, weil das Bedienungspersonal wirklich erst dann in den Arbeitsraum eingreift, wenn die Bedienertür automatisch geöffnet wurde, was jedoch erst nach Beendigung der jeweiligen Bearbeitung geschieht. Ein derartiger Öffnungsmechanismus ist mit geringem technischen Aufwand verbunden, da die Ablaufsteuerung der Werkzeugmaschine, die das Bearbeitungsende selbst bestimmt, dann lediglich noch einen Öffnungsimpuls an einen z.B. Motor oder Hydraulikantrieb vorgeben muß. Damit sind aber auch an die Aufmerksamkeit des Bedienungspersonals nur noch geringe Anforderungen gerichtet, die Entscheidung, wann die Bedienertür nun tatsächlich geöffnet werden kann, wird abgenommen.

Weiterhin ist es hier bevorzugt, wenn zumindest einige der Werkzeugmaschinen einen automatischen Spülmechanismus aufweisen, der nach Beendigung der jeweiligen Bearbeitung eines Werkstückes dieses sowie die Aufnahme selbsttätig spült.

Hier ist von Vorteil, daß das Bedienungspersonal von Spänen und Bohrwasser gereinigte Werkstücke aus dem Arbeitsraum entnimmt, so daß die Tätigkeit an dem neuen Maschinenzentrum mit keiner großen Schmutzbelastung verbunden ist. Auch dies führt zu einer großen Akzeptanz des neuen Maschinenzentrums, insbesondere in derartigen Firmen, wo bisher keine hochautomatisierten Maschinen eingesetzt wurden. Wenn eine derartige Firma jetzt zumindest einen Teil ihrer Produktion auf das neue Maschinenzentrum umstellt, so kann das bisherige Personal weiter eingesetzt werden, wobei sich deren Arbeitsumgebung wegen der geringeren körperlichen Anforderungen sowie der geringeren Schmutzbelastung deutlich verbessert.

Weiter ist es bevorzugt, wenn zumindest einige der Werkzeugmaschinen eine Erfassungsvorrichtung aufweisen, die nach dem Auswechseln des Werkstückes selbsttätig die Bedienertür schließt und den Bearbeitungsvorgang für das nächste Werkstück startet.

Diese Maßnahme weist zum einem sicherheitstechnische Vorteile auf, weil in Abhängigkeit von der Arbeitsgeschwindigkeit der jeweiligen Bedienungsperson der nächste Bearbeitungsgang eingeleitet wird, wobei vorher noch die Bedienertür geschlossen wird. Andererseits wird das Bedienungspersonal davon entlastet, bestimmte Knöpfe oder Hebel zu bedienen, um den nächsten Arbeitsgang einzuleiten, wodurch also zum einem Fehlbedienungen vermieden werden und zum anderen auch weniger qualifiziertes Personal eingesetzt werden kann.

Die Erfassungsvorrichtung kann dabei eine Lichtschranke aufweisen, die die Ladeöffnung überwacht, oder aber einen Schalter umfassen, der von einer Bedienungsperson vorzugsweise automatisch ausgelöst wird, wenn diese nach dem Werkstückwechsel den Bereich der Ladeöffnung verläßt.

Diese Maßnahmen sind konstruktiv von Vorteil, weil sowohl Lichtschranke als auch Schalter einfache Bauteile sind, aus denen sich eine derartige Erfassungsvorrichtung preiswert aufbauen läßt. Der Schalter kann z.B. ein Näherungsschalter oder ein sogenannter Walk-Schalter sein, der mit einem Meßstab in den Laufbereich der Bedienungsperson hineinragt.

Insgesamt ist es bevorzugt, wenn unter der Transportbahn ein System von Auffangwannen vorgesehen ist, die über Auffangbleche von den Werkstücken abtropfende Flüssigkeit in die Werkzeugmaschine zurückleiten.

Hier ist von Vorteil, daß der Laufbereich der Bedienungspersonen nicht durch abtropfendes Spülwasser verunreinigt wird, so daß auch hierdurch insgesamt die Akzeptanz des neuen Maschinenzentrums erhöht wird. Ein weiterer Vorteil liegt darin, daß die Werkshalle, wo das neue Maschinenzentrum aufgestellt ist, relativ einfach zu reinigen ist. Auch die Betriebskosten des neuen Maschinenzentrums werden durch Maßnahme gesenkt, denn das rückgeführte Wasser kann ggf. nach einer entsprechenden Filterung wiederverwendet werden.

In einer Weiterbildung ist es bevorzugt, wenn die Transportbahn ortsfeste Abschnitte, die jeweils zwei benachbarte Werkzeugmaschinen miteinander verbinden, sowie verschiebbare Abschnitte aufweist, die vor einer Bedienertür derart quer verschiebbar angeordnet sind, daß sie durch die Ladeöffnung in den Arbeitsraum einschiebbar sind.

Diese Maßnahme ist insbesondere bei ausladenden Werkzeugmaschinen von Vorteil, bei denen sich die Bedienungsperson weit in den Arbeitsraum hineinlehnen muß, um das Werkstück in die Aufnahme einzusetzen.

Der verschiebbare Abschnitt ist vorzugsweise ein Ladewagen, der über einen Schub verschiebbar ist.

Hier ist weiter von Vorteil, daß ein leichtgängiger Schub verwendet wird, wie er z.B. an Maschinentischen eingesetzt wird, so daß das Bedienungspersonal diesen Ladewagen ohne Kraftaufwand in den Arbeitsraum hineinschieben kann, wo dann nur noch der Austausch der Werkstücke manuell zu erfolgen hat. Der hierfür erforderliche Kraftaufwand ist also denkbar gering.

Wenn der Ladewagen über einen Schnellverschluß mit dem Schub verriegelbar ist, kann er zu Servicezwecken leicht ausgewechselt werden, so daß sich die Handhabung vorteilhaft vereinfacht.

Hierbei ist es dann weiter bevorzugt, wenn der verschiebbare Abschnitt in seiner Grundposition außerhalb des Arbeitsraumes über eine Rastung unverschiebbar gehalten ist, wobei die Erfassungsvorrichtung vorzugsweise einen Endschalter umfaßt, der auf die relative Lage des verschiebbaren Abschnittes zu der Bedienertür anspricht.

Diese Maßnahme ist konstruktiv von Vorteil, weil durch die Rastung eine einfache Arretierung des Ladewagens in seiner Grundsposition möglich ist. Andererseits kann diese Rastung durch leichten Druck überwunden werden, so daß das Einschieben des Ladewagens in den Arbeitsraum problemlos möglich ist. Die Anordnung des Endschalters bietet weitere konstruktive Vorteile, weil der Werkstückwechsel mit Sicherheit beendet ist, wenn der Ladewagen in seine Grundposition zurückkehrt, was durch den Endschalter an die Ablaufsteuerung gemeldet wird, die dann die Bedienertür schließt und den nächsten Bearbeitungsgang startet.

Weitere Vorteile ergeben sich aus der Beschreibung und der beigefügen Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Fig. 1: eine schematische Draufsicht auf das neue Maschinenzentrum;
- Fig. 2: eine schematische Seitenansicht einer Werkzeugmaschine aus dem Maschinenzentrum aus Fig. 1;
- Fig. 3: eine schematische Seitenansicht eines bei dem Maschinenzentrum aus Fig. 1 zu verwendenden Ladewagens; und
- Fig. 4: eine schematische Vorderansicht des Ladewagens aus Fig. 3.

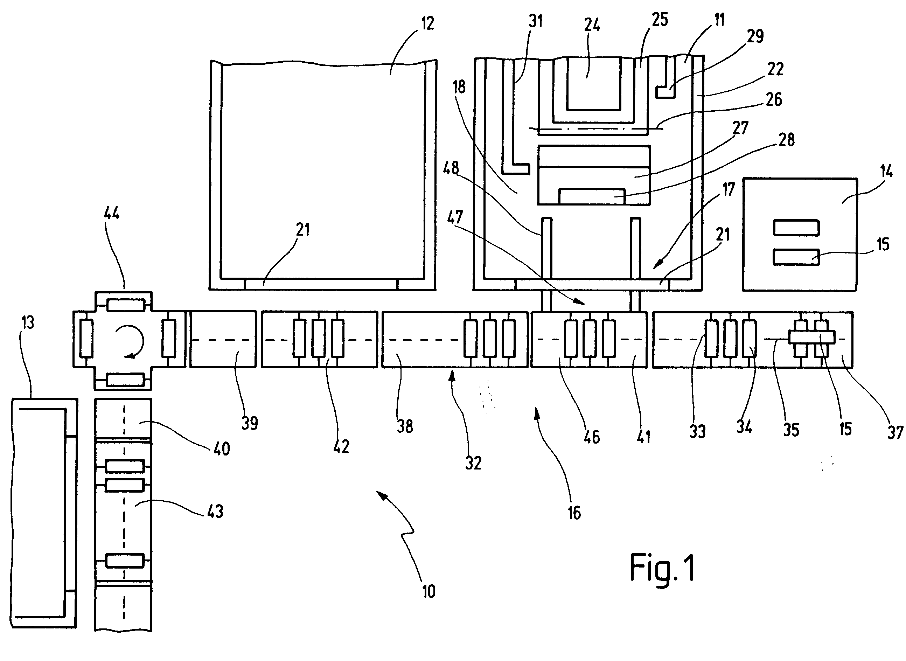

In Fig. 1 ist schematisch eine Draufsicht auf ein neues Maschinenzentrum 10 gezeigt, bei dem entlang einer U-förmigen Bahn Werkzeugmaschinen 11, 12 und 13 angeordnet sind. Rechts neben der Werkzeugmaschine 11 ist in Fig. 1 noch ein Teilespeicher 14 angedeutet, der zu bearbeitende Werkstücke 15 trägt.

Das Maschinenzentrum 10 weist ferner ein Beladesystem 16 auf, das dazu vorgesehen ist, Werkstücke 15 zu und zwischen den einzelnen Werkzeugmaschinen 11, 12, 13 zu transportieren, und ein Auswechseln der Werkstücke 15 an den Werkzeugmaschinen 11, 12, 13 zu ermöglichen.

Das Beladesystem 16 ist ein manuell zu bedienendes Beladesystem, wie es weiter unten noch ausführlich beschrieben werden wird.

Die manuell bspw. zu der Werkzeugmaschine 11 transportierten Werkstücke 15 werden manuell durch eine Ladeöffnung 17 in einen Arbeitsraum 18 der Werkzeugmaschine eingegeben. Hierzu wird eine Bedienertür 21 geöffnet, die die Ladeöffnung 17 verschließt und in einer Verkleidung 22 der Werkzeugmaschine 11 angeordnet ist.

In dem Arbeitsraum 18 ist eine Aufnahme 24 für zu bearbeitende Werkstücke 15 vorgesehen. An der Aufnahme 24 ist ein Auswerfer 25 angeordnet, der um eine Schwenkachse 26 nach oben schwenkbar ist und dabei bearbeitete Werkstücke 15 von der Aufnahme 24 in einen Zwischenspeicher 27 überführt. In Fig. 1 ist zu erkennen, daß ein bearbeitetes Werkstück 28 in dem Zwischenspeicher 27 liegt.

Beidseits von Aufnahme 24, Auswerfer 25 sowie Zwischenspeicher 27 sind Spülrohre 29 und 31 vorgesehen, die nach dem Auswerfen eines bearbeiteten Werkstückes 28 sowohl die Aufnahme 24 als auch das Werkstück 28 in der Aufnahme 27 spülen und dabei von Spänen und Bohrwasser befreien.

Für den manuellen Transport der Werkstücke 15, 28 zwischen den Werkzeugmaschinen 11, 12, 13 umfaßt das Beladesystem 16 eine Transportbahn 32, die eine Rollenbahn 33 mit horizontalen Transportrollen 34 ist. Auf diesen Transportrollen 34 können Werkstücke 15 in einer durch einen Pfeil 35 angedeuteten Verfahrrichtung von dem Bedienungspersonal verschoben werden, wozu nur ein sehr geringer Kraftaufwand erforderlich ist. Unabhängig von dem Gewicht und der Sperrigkeit der Werkstücke 15 lassen sich auf dieser Transportbahn 32 beliebige Werkstücke auch von nicht sehr kräftigen Personen zu den einzelnen Werkzeugmaschinen 11, 12, 13 schieben.

Die Transportbahn 32 weist dabei ortsfeste Abschnitte 37, 38, 39, 40 auf, die die Werkzeugmaschinen 11, 12, 13 miteinander verbinden bzw. die Werkzeugmaschine 11 mit dem Teilspeicher 14 verbinden.

Zwischen diesen ortsfesten Abschnitten 37, 38, 39, 40 sind verschiebbare Abschnitte 41, 42, 43 vorgesehen, die jeweils im Bereich einer Bedienertür 21 angeordnet sind und eine geringere Breite als dieser aufweisen.

Zwischen den ortsfesten Abschnitten 39 und 40 ist noch ein drehbares Eckteil 44 vorgesehen, in das z.B. von rechts Werkstücke 15, 28 eingeschoben worden, woraufhin dieses Eckteil 44 dann um 90° gedreht wird, so daß das Werkstück 15, 28 dann auf den Abschnitt 40 geschoben werden kann.

Die verschiebbaren Abschnitte 41, 42, 43 sind als Ladewagen 46 ausgebildet, die auf einem Schub 47 sitzen. Dieser Schub 47 umfaßt jeweils zwei Führungsleisten 48, die durch die Bedienertür 21 hindurch in den Arbeitsraum 18 hineinführen.

Bei geöffneter Bedienertür 21 kann eine Bedienungsperson, die ein Werkstück 15, 28 auf den Ladewagen 46 geschoben hat, diesen in den Arbeitsraum 18 hineinschieben, wo dann zunächst das Werkstücke 15 auf die Aufnahme 24 aufgelegt wird, bevor dann das bearbeitete Werkstück 28 aus dem Zwischenspeicher 27 entnommen und auf den Ladewagen 46 gelegt wird. Der Ladewagen 46 wird aus dem Arbeitsraum 18 herausgezogen, woraufhin die Werkzeugmaschine 11 mit der Bearbeitung des nächsten Werkstückes 15 beginnt.

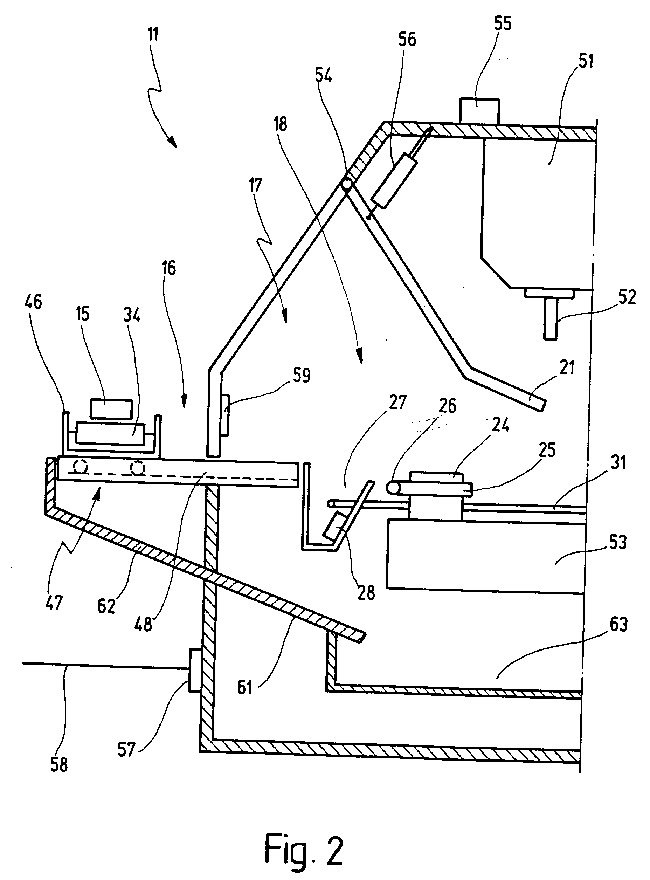

In Fig. 2 ist die Werkzeugmaschine 11 in einer Seitenansicht dargestellt, die in Fig. 1 von rechts genommen wurde.

Zunächst ist in Fig. 2 noch eine Spindel 51 der Werkzeugmaschine 11 angedeutet, die ein Werkzeug 52 zur Bearbeitung eines Werkstückes 15 trägt. Ferner ist noch ein Werkstücktisch 53 gezeigt, auf dem die Aufnahme 24 angeordnet ist. Der Auswerfer 25 liegt unterhalb und neben der Aufnahme 24, so daß er bei Schwenken um seine Schwenkachse 26 ein bearbeitetes Werkstück 28 in den Zwischenspeicher 27 überführt.

In Fig. 2 ist schematisch die Bedienertür 21 um ihre Schwenkachse 54 nach innen geklappt gezeigt, so daß jetzt eine Bedienungsperson den Ladewagen 46 in den Arbeitsraum 18 einschieben kann, um dann durch die Ladeöffnung 17 hindurch das Werkstück 15 auf die Aufnahme 24 aufzulegen und das bearbeitete Werkstück 28 zu entnehmen. Ein verschiebbarer Ladewagen 46 ist zur Arbeitserleichterung nur bei den Werkzeugmaschinen 11, 12, 13 des Maschinenzentrums 10 erforderlich, bei denen der Spindelkopf 15 bzw. daran angeordnete Werkzeugwechsler eine so große Ausladung haben, daß das Bedienungspersonal sich weit in den Arbeitsraum 18 hineinlehnen muß, um auf die Aufnahme 24 zugreifen zu können. Bei Werkzeugmaschinen mit geringer Tiefe kann auf Ladewagen 46, Schub 47 sowie Führungsleisten 48 selbstverständlich verzichtet werden.

An der Werkzeugmaschine 11 ist in Fig. 2 noch schematisch eine Ablaufsteuerung 55 vorgesehen, die die Aufnahme 24, den Auswerfer 25, die Spülrohre 29, 31 sowie die Bedienertür 21 steuert. Nach der Beendigung der Bearbeitung des Werkstückes 28 sorgt die Ablaufsteuerung 55 dafür, daß das Werkstück 28 automatisch in den Zwischenspeicher 27 ausgeworfen und dort gespült wird. Danach wird dann die Bedienertür 21 über eine schematisch angedeutete Kolben-Zylinder-Einheit 56 in ihre offene Stellung geschwenkt.

Das Auswechseln der Werkstücke 14, 28 wird jetzt z.B. dadurch überwacht, daß ein Schalter 57 mit einer federnden Stange 58 vorgesehen ist, die in den Laufbereich einer Bedienungsperson hineinragt. Wenn jetzt eine Bedienungsperson den Werkstückwechsel durchgeführt hat und sich mit dem Werkstück 28 auf der Rollenbahn 33 von der Werkzeugmaschine 11 wegbewegt, so stößt sie dabei gegen die Stange 58, was der Schalter 57 an die Ablaufsteuerung 55 meldet, die daraufhin die Bedienertür 21 schließt und die Bearbeitung des nächsten Werkstückes 15 startet.

Alternativ kann auch eine Lichtschranke 59 vorgesehen sein, die die Entnahme des Werkstückes 28 überwacht und an die Ablaufsteuerung 55 meldet. Durch diesen automatischen Öffnungsmechanismus 55, 56 sowie die automatische Erfassungsvorrichtung 57, 59 wird dafür gesorgt, daß die Bedienungsperson keine weiteren Manipulationen an der Werkzeugmaschine 11 vornehmen muß, so daß eine hohe Betriebssicherheit trotz des einfachen Aufbaus gewährleistet ist.

Unter dem Beladesystem 16 ist noch ein System von Auffangwannen 61 mit Auffangblechen 62 vorgesehen, über das von den Werkstücken 15, 28 auf der Transportbahn 32 abtropfendes Wasser in einen Sammelbehälter 36 in der Werkzeugmaschine 11 hineinläuft, wo es gesammelt wird und wiederverwendet werden kann.

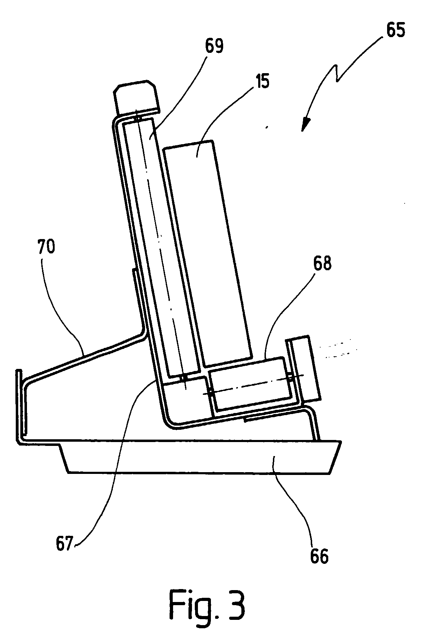

In Fig. 3 ist ein weiteres Ausführungsbeispiel eines Ladewagens 65 gezeigt, wie er bei der Transportbahn 32 aus den Fig. 1 und 2 eingesetzt werden kann.

Der Ladewagen 65 umfaßt zunächst ein Bodenblech 66, über das er auf den Schub 47 aufgesetzt wird. Ferner ist ein gebogenes, L-förmiges Blech 67 vorgesehen, das schräg auf dem Bodenblech 66 aufsitzt.

In dem gebogenen Blech 67 sind horizontale Transportrollen 68 sowie vertikale Transportrollen 69 vorgesehen, auf denen ein schematisch angedeutetes Werkstück 15 verschiebbar ist. Die Transportrollen 68, 69 sind in Fig. 3 nach links, also von der Werkzeugmaschine weg geneigt, um für eine sichere Lage des Werkstückes 15 zu sorgen. Zur Festigkeit ist noch ein Stützblech 70 vorgesehen, das das gebogene Blech 67 mit dem Bodenblech 66 verbindet.

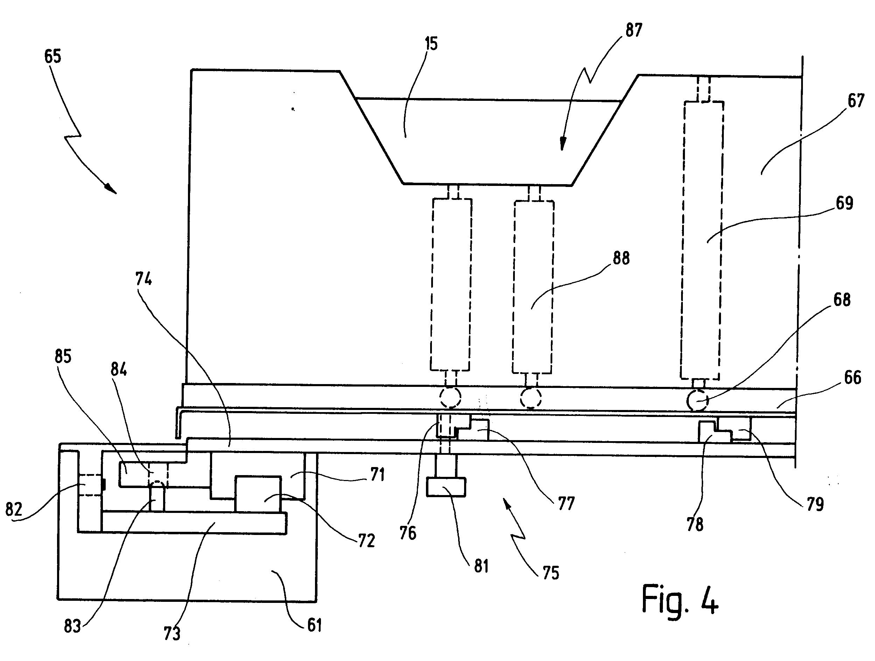

Fig. 4 zeigt eine von links gesehen Draufsicht auf den Ladewagen 65 aus Fig. 3. Die Darstellung in Fig. 4 ist ausschnittsweise gewählt, wobei auch Teile des Schubes 47 dargestellt sind.

Der Schub 47 umfaßt zunächst eine Linearführung 71, die auf einer Führungsleiste 72 läuft, die den Führungsleisten 48 aus Fig. 1 entspricht. Die Führungsleiste 72 ist über einen Träger 73 an der Werkzeugmaschine 11 befestigt. Auf der Linearführung 71 ist eine durchgehende Platte 74 angeordnet, die in Fig. 4 nicht dargestellt auf der rechten Seite auf einer weiteren Linearführung 71 sitzt, die auf einer weiteren Führungsleiste 72 läuft.

Auf der durchgehenden Platte 74 sitzt der Ladewagen 65 mit seinem Bodenblech 66, wobei zwischen Bodenblech 66 und Platte 74 ein Schnellverschuß 75 angeordnet ist. Dieser Schnellverschluß 75 arbeitet nach Art eines Bajonettverschlusses, ist jedoch nicht drehbar sondern schiebbar ausgebildet.

Zu diesem Zweck umfaßt der Schnellverschluß 75 zwei L-förmige Profilleisten 76, 77, die durch Verschieben des Ladewagens 65 gegenüber der Platte 74 miteinander in Eingriff gelangen.

Rechts neben den Profilleisten 76 und 77 sind zwei weitere Profilleisten 78 und 79 vorgesehen, wobei die Profilleisten 76 und 79 an dem Bodenblech 66 befestigt sind, während die Profilleisten 77 und 78 an der Platte 74 befestigt sind. Durch diese Anordnung wird bewirkt, daß der Ladewagen 65 nicht quer zu der Platte 74 verschoben werden kann.

Ferner ist noch ein federbelasteter Rastbolzen 81 angedeutet, über den eine nur manuell lösbare Rastung zwischen dem Ladewagen 65 und dem Schub 47 erfolgt.

Trotz des mechanisch sehr festen Sitzes des Ladewagens 65 an der Platte 74 kann der Ladewagen 65 leicht entnommen werden, indem lediglich der Rastbolzen 81 nach unten gezogen wird, woraufhin dann der Ladewagen 65 senkrecht zur Zeichenebene der Fig. 4 gegenüber der Platte 74 verschöben wird, so daß der Schnellverschluß 65 außer Eingriff gerät.

In Fig. 4 ist weiter gezeigt, daß an dem Träger 63 ein Endschalter 82 vorgesehen ist, über den die Position der Platte 74 und damit des Ladewagens 65 zu dem Träger 73 überprüft werden kann. Die Information dieses Endschalters 82 kann zusätzlich oder alternativ zu der Information des Schalters 57 und/oder der Lichtschranke 59 dazu verwendet werden, ein Steuersignal zum Schließen der Bedienertür 21 sowie zum Start des nächsten Bearbeitungsvorganges zu generieren.

An dem Träger 73 ist ferner eine Rastnase 83 vorgesehen, die in ein entsprechendes Rastloch 84 eingreift, das an einem Ausleger 85 der Platte 74 vorgesehen ist. Über diese Rastung 83, 84 wird die Platte 74 in ihrer Grundposition verriegelt, in der der Ladewagen 65 ganz aus dem Arbeitsraum 18 herausgefahren ist, sich also in Fig. 2 in der ganz linken Position befindet. Die Rastung 83, 84 ist leicht überdrückbar, so daß mit geringem Kraftaufwand der Ladewagen 65 in den Arbeitsraum 18 hineingeschoben werden kann, er aber dennoch in der Grundposition sicher arretiert ist.

In Fig. 4 ist schließlich noch zu erkennen, daß der Ladewagen an dem gebogenen Blech 67 einen Eingriff 87 aufweist, der ein leichtes Erfassen des Werkstückes 15 ermöglicht. Im Bereich des Eingriffes 87 sind kurze Transportrollen 88 vorgesehen, während zu beiden Seiten des Eingriffes 87 die in Fig. 3 dargestellten größeren vertikalen Transportrollen 69 liegen.

## Patentansprüche

1. Maschinenzentrum mit mehreren entlang einer Bahn angeordneten Werkzeugmaschinen (11, 12, 13), die jeweils einen durch eine Bedienertür (21) zugänglichen Arbeitsraum (18) zum Bearbeiten von in einer Aufnahme (24) befindlichen Werkstücken (15, 28) aufweisen, sowie einem Beladesystem (16) zum Transportieren der Werkstücke (15, 16) zwischen den einzelnen Werkzeugmaschinen (11, 12, 13) und zum Auswechseln der Werkstücke (15, 28) an den Werkzeugmaschinen durch eine von der jeweiligen Bedienertür (21) verschließbare Ladeöffnung (17), wobei zumindest einige der Werkzeugmaschinen (11, 12, 13) nacheinander an demselben Werkstücke (15, 28) unterschiedliche Bearbeitungsvorgänge durchführen,
dadurch gekennzeichnet, daß das Beladesystem (16) eine an den Werkzeugmaschinen (11, 12, 13) angeordnete Transportbahn (32) zum manuellen Verfahren der Werkstücke (15, 28) von einer Werkzeugmaschine (11, 12, 13) zu einer nächsten umfaßt.

2. Maschinenzentrum nach Anspruch 1, dadurch gekennzeichnet, daß die Transportbahn (32) eine Rollenbahn (33) ist, an der Transportrollen (34, 68, 69, 88) quer zur Verfahrrichtung (35) der unmittelbar auf diesen verschiebbaren Werkstücke (15, 28) vorgesehen sind.

3. Maschinenzentrum nach Anspruch 2, dadurch gekennzeichnet, daß zumindest einige der Transportrollen (34, 68, 69, 88) im wesentlichen waagerecht verlaufen.

4. Maschinenzentrum nach Anspruch 2 oder Anspruch 3, dadurch gekennzeichnet, daß zumindest einige der Transportrollen (34, 68, 69, 88) im wesentlichen vertikal und von der Werkzeugmaschine (11, 12, 13) weggeneigt verlaufen.

5. Maschinenzentrum nach einem der Ansprüche 1 bis 4, dadurch gekennzeichnet, daß zumindest einige der Werkzeugmaschinen (11, 12, 13) in ihrem Arbeitsraum (18) einen Zwischenspeicher (27) für Werkstücke (28) aufweisen.

6. Maschinenzentrum nach Anspruch 5, dadurch gekennzeichnet, daß zumindest einige Werkzeugmaschinen (11, 12, 13) in ihrem Arbeitsraum (18) einen Auswerfer (25) aufweisen, der fertig bearbeitete Werkstücke automatisch aus der Aufnahme (24) in einen Zwischenspeicher (27) überführt.

7. Maschinenzentrum nach einem der Ansprüche 1 bis 6, dadurch gekennzeichnet, daß zumindest einige der Werkzeugmaschinen (11, 12, 13) einen automatischen Öffnungsmechanismus (55, 56) aufweisen, der nach Beendigung der jeweiligen Bearbeitung eines Werkstückes (15, 28) die Bedienertür (21) selbsttätig öffnet.

8. Maschinenzentrum nach einem der Ansprüche 1 bis 7, dadurch gekennzeichnet, daß zumindest einige der Werkzeugmaschinen (11, 12, 13) einen automatischen Spülmechanismus (29, 31) aufweisen, der nach Beendigung der jeweiligen Bearbeitung eines Werkstückes (15, 28) dieses sowie die Aufnahme (24) selbsttätig spült.

9. Maschinenzentrum nach einem der Ansprüche 1 bis 8, dadurch gekennzeichnet, daß zumindest einige der Werkzeugmaschinen (11, 12, 13) eine Erfassungsvorrichtung (57, 59, 82) aufweisen, die nach dem Auswechseln des Werkstückes (15, 28) selbsttätig die Bedienertür (21) schließt und den Bearbeitungsvorgang für das nächste Werkstück (15) startet.

10. Maschinenzentrum nach Anspruch 9, dadurch gekennzeichnet, daß die Erfassungsvorrichtung (57, 59, 82) eine Lichtschranke (59) umfaßt, die die Ladeöffnung (17) überwacht.

11. Maschinenzentrum nach Anspruch 9, dadurch gekennzeichnet, daß die Erfassungsvorrichtung (57, 59, 82) einen Schalter (57) umfaßt, der von einer Bedienungsperson vorzugsweise automatisch ausgelöst wird, wenn diese nach dem Werkstückwechsel den Bereich der Ladeöffnung (17) verläßt.

12. Maschinenzentrum nach einem der Ansprüche 1 bis 11, dadurch gekennzeichnet, daß unter der Transportbahn (32) ein System von Auffangwannen (61) vorgesehen ist, die über Auffangbleche (62) von den Werkstücken (15, 28) abtropfende Flüssigkeit in die Werkzeugmaschine (11, 12, 13) zurückleiten.

13. Maschinenzentrum nach einem der Ansprüche 1 bis 12, dadurch gekennzeichnet, daß die Transportbahn (32) ortsfeste Abschnitte (37, 38, 39, 40), die jeweils zwei benachbarte Werkzeugmaschinen (11, 12, 13) miteinander verbinden, sowie verschiebbare Abschnitte (41, 42, 43) aufweist, die vor einer Bedienertür (21) derart quer verschiebbar angeordnet sind, daß sie durch die Ladeöffnung (17) in den Arbeitsraum (18) einschiebbar sind.

14. Maschinenzentrum nach Anspruch 13, dadurch gekennzeichnet, daß der verschiebbare Abschnitt (41, 42, 43) als Ladewagen (46, 65) ausgebildet ist, der über einen Schub (47) verschiebbar ist.

15. Maschinenzentrum nach Anspruch 14, dadurch gekennzeichnet, daß der Ladewagen (46, 65) über einen Schnellverschluß (75) an dem Schub (47) verriegelbar ist.

16. Maschinenzentrum nach einem der Ansprüche 13 bis 15, dadurch gekennzeichnet, daß der verschiebbare Abschnitt (41, 42, 43) in seiner Grundposition außerhalb des Arbeitsraumes (18) über eine Rastung (83, 84) unverschiebbar gehalten ist.

17. Maschinenzentrum nach den Ansprüchen 9 und 13, dadurch gekennzeichnet, daß die Erfassungsvorrichtung (57, 59, 82) einen Endschalter (82) umfaßt, der auf die relative Lage des verschiebbaren Abschnittes (41, 42, 43) zu der Bedienertür (21) anspricht.
